# EUROPEAN PATENT APPLICATION

(11) **EP 0 756 438 A1**
(43) Date of publication of application: **29.01.1997**
(21) Application number: 95111170.7
(22) Date of filing: 15.07.1995
(51) Int. Cl.: H04S 7/00, H04N 5/60

(54) **A method and device for correcting the auditory image in a multichannel audio system**

(71) Applicant: NOKIA TECHNOLOGY GmbH, 75175 Pforzheim (DE)
(72) Inventor: Jokinen, Raimo, FI-24260 Salo (FI); Mäkivirta, Aki, FI-73100 Lapinlahti (FI)

(57) **Abstract**

The invention is related to the correction of the auditory image in a multichannel audio system. By means of the method and device according to the invention, the narrowing and distortion of the auditory image due to the location of the listener (4) and the loudspeakers (1, 2, 3), which differs from the assumed ideal location when producing sound, is corrected by setting for the audio signal of at least one channel a delay and in this way by virtually displacing (dc, dl) the corresponding loudspeaker (1, 2) to a new location (1', 2'), which with respect to the location of the listener (4) and either the actual location of the other loudspeakers (3) or their virtual location that is achieved by means of the delay (1', 2') corresponds as well as possible to the assumed reproduction situation. The device for setting the delays can be implemented in such a way that the user can set an additional distance (dc, dl) corresponding to the delay directly in length units, for example, in metres. The primary application of the invention is a multichannel television audio system.

## Description

The invention is connected with multichannel audio systems and correction of the auditory image in such systems, and in particular the invention relates to multichannel television audio systems and the correction of the auditory image in them in a reproduction situation, above all in home viewing.

A multichannel audio system is here taken to mean an audio system which for sound generation and reproduction purposes and in order to achieve a stereo impression has several channels used in a well-known manner and which in the reproduction situation are brought each to its own speaker located at a distance from the other speakers. The stereophony of audio systems of this kind has been discussed in the publication G. Theile, Further Developments of Loudspeaker Stereophony, 89th AES Convention, Los Angeles, Sept. 21-25, 1990. Typical multichannel audio systems are stereo television systems which today are gaining increasing popularity and in which in order to stabilize the auditory image and to extend the good listening area, a third centrally positioned audiochannel has been put into use in addition to the left and right channel. The loudspeaker of the middle channel is normally in the receiving unit itself. These three channels produce a so-called frontal auditory image, the correction of which is discussed herein in more detail. Television audio systems can furthermore incorporate other channels, for example, to produce background sound or especially for the bass range.

In this application a loudspeaker is taken to mean a loudspeaker unit to which the signal of an audiochannel is directed and which can, in a manner that is well known, contain one or several loudspeaker elements as well as other electrical circuit connections for converting the signal of the audiochannel into sound.

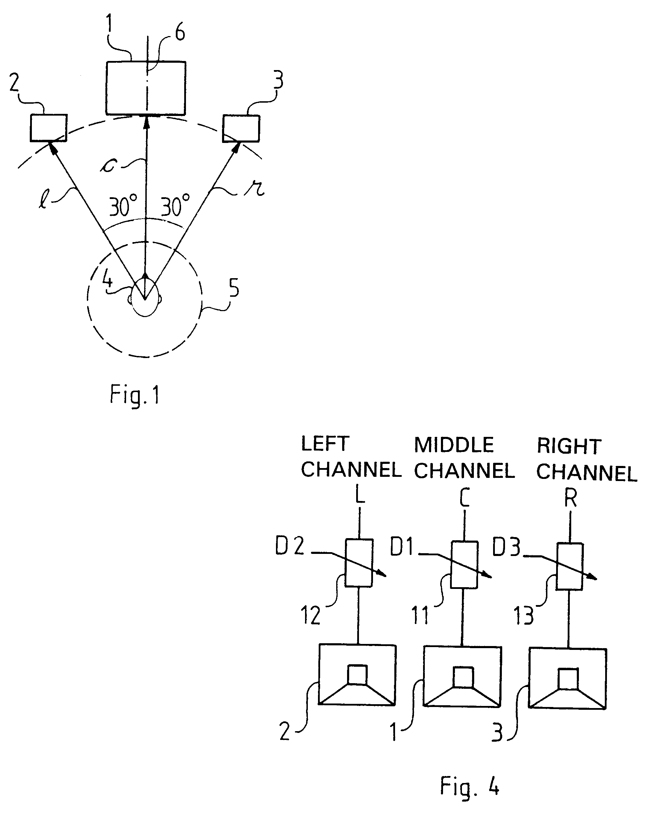

When sound intended for stereo reproduction is produced, certain assumptions are made regarding the reproduction situation. In the television audio system that is the object of this analysis, the ideal reproduction situation according to these assumptions is shown in Figure 1. A listener 4 is considered to be in an ideal listening place on the so-called stereophonic axis 6 at a point with respect to which the middle loudspeaker 1 is directly in front, the left loudspeaker 2 and the right loudspeaker 3 are symmetrically at a 30 angle on both sides of it and the distances 1, c and r are the same to all the loudspeakers. If the viewer/listener 4, when viewing a programme thus reproduced, is actually in the good listening area 5 roughly at the point to which the sounds from the different loudspeakers come from the correct directions and simultaneously, as judged from the standpoint of sound reproduction, the stereo impression experienced is the best possible. The resulting auditory image produced in sound reproduction then corresponds to the desired auditory image in which the auditory events are in the places they were intended to be.

When the perceived direction of the auditory events in a reproduction situation diverges from the direction in which they should be for the auditory image, this is termed distortion of the auditory image. If, for example, in the auditory system in question the sound comes from the middle loudspeaker with an intensity that is clearly greater than that intended either because the loudspeaker is too near or because its volume is too high, the perceived auditory events are shifted closer than intended to the middle loudspeaker and the auditory image is narrowed. The good listening area 5 shown in Figure 1 is taken to mean the area within which the distortion of the auditory image heard is less than certain set limits. The extent of the good listening area and the distortion of the auditory image in various multichannel audio systems is discussed in the above-mentioned publication G. Theile, Further Developments of Loudspeaker Stereophony.

In home viewing in particular, problems arise due to the fact that the reproduction situation most often is not anywhere near ideal and does not correspond to the basic assumptions. In the first place, the arrangement of the receiver and the side loudspeakers with respect to each other can already differ considerably from the ideal and, on the other hand, the listener can be so much to the side of the listening area, which according to this arrangement already gives a distorted auditory image but is nevertheless the best, that the perceived auditory image for this reason ends up being even worse. In the following these problems are examined in greater detail.

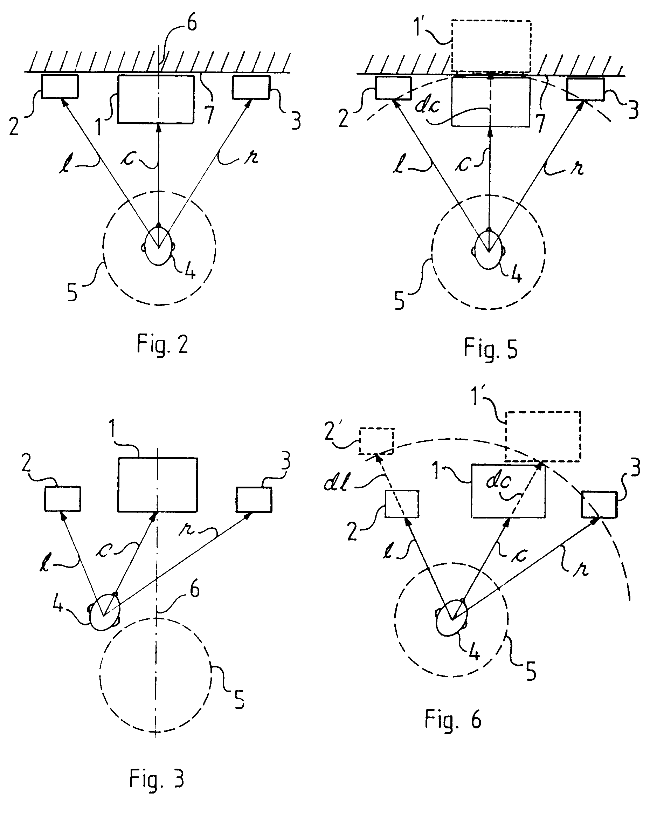

In home viewing the viewing distance is typically 2 to 5 metres. This means that the ideal placement calls for a distance between the side loudspeakers of 3.5 to 8.5 metres. if the loudspeaker of the middle channel, ie, the TV receiver, is located in a direct line with the left and right speaker, as is usually done in home conditions, and if the listener is correctly positioned with respect to the side loudspeakers, the distance difference to the listener is 0.3 to 0.8 metres between the middle loudspeaker and the side loudspeakers. When the sound reaches the listener's ears, this corresponds to a time-of-arrival difference of 0.9 to 2.3 ms. Since receiver 1 and the side speakers 2 and 3 are typically against the same wall 7 as shown in Figure 2, and receiver 1 is larger in size than side loudspeakers 2 and 3, this difference can be even greater. The psychological effect of such time-of-arrival differences is a change in the auditory image. The perceived auditory image becomes narrower and distorted, and the stereo impression is impaired.

Figure 3 shows a situation in which the viewer/listener 4 is clearly to the side of the stereo axis 6 and the best listening area 5 of this arrangement, ie, from the area in which the auditory image in this arrangement is the best even though it is inherently narrowed down and distorted. In this case the time-of-arrival differences distort the auditory image even more than in the case shown in Figure 2.

It is well known especially from experience with conventional 2-channel stereo systems that small differences in the time-of-arrival can be compensated for by altering the signal levels of the channels - ie, by so-called level balancing. Distortion can be compensated for up to a certain amount by lowering the level of the sound which is transmitted closer to the listener, ie, the level of the signal of the channel coming to the corresponding loudspeaker. Because the situation in home viewing and listening can nevertheless be extremely disadvantageous, level balancing nevertheless cannot, due to limitations inherent in the method, always produce a satisfactory result. By altering the signal levels it is not possible to remove the fundamental problem itself, which is caused by the differences in the time-of-arrival. The formation of a stereophonic auditory image in a 2-channel system and the effect on the auditory image of time and amplitude differences between the channels are discussed in the publication K. Blair Benson, Audio Engineering Handbook, McGraw-Hill, 1988, pp. 1.56 to 1.64.

The purpose of the invention is to provide a solution, which is clearly better than the above-described level balancing, to the problem of the narrowing and distortion of the auditory image generated in a multichannel audio system when producing sound in an unideal reproduction situation that differs from the basic assumptions. The solution is based on compensation for the differences in time-of-arrival by setting delays for the audio channels corresponding to the loudspeakers that are too close to the listener with reference to the location that best corresponds to the assumed location. Setting a delay for the audio channel appears to displace the corresponding loudspeaker from the listener by a distance that corresponds to the distance which the sound travels during the set delay. Virtual distance shifts of up to 1.5 metres can be achieved by means of the solution, which results in compensation for time-of-arrival differences of up to 5 ms.

The method according to the invention is characterized by what is disclosed in claim 1.

The device according to the invention is characterized by what is disclosed in claim 4.

The other claims disclose various embodiments of the method and device according to the invention. In a multichannel television audio system, the following kinds of advantages can be achieved by means of the invention. In a typical problem situation of the kind shown in Figure 2, the middle loudspeaker can be positioned apparently at the same distance as the side loudspeakers by means of a delay set for the middle channel. In the problem situation case shown in Figure 3, the listening arrangement and thus the auditory image arriving at the listener can be corrected to be closer to the ideal through a virtual displacement of two of the three loudspeakers by means of delays to be set for the corresponding channels. The user can himself make the necessary adjustments and the device according to the invention can be implemented in such a way that a fairly unexpert user can obtain a direct readout, for example, in metres, of the virtual distance shift resulting from the adjustment. By means of the invention the auditory image reaching the listener can be corrected and improved significantly, also in very difficult home viewing situations.

The invention and its embodiments are discussed more fully in the following detailed description and drawings, in which:
- Figure 1: shows an ideal reproduction situation in a certain multichannel audio system,
- Figure 2: shows a certain typical unideal reproduction situation of a multichannel audio system,
- Figure 3: shows a certain other unideal reproduction situation of a multichannel audio system,
- Figure 4: shows the principle of the method and device according to the invention,
- Figure 5: shows the corrective effect obtainable with the invention in the reproduction situation of Figure 2,
- Figure 6: shows the corrective effect obtainable with the invention in the reproduction situation of Figure 3,
- Figure 7: shows a block diagram of a certain circuit solution for setting the delay, and
- Figure 8: shows a certain embodiment of a device for setting the delay of the channels, in which device the user can set the virtual additional distances which correspond to the delays and are obtained from the loudspeakers corresponding to the channels, this being accomplished directly in metres, with Figure 8(a) showing the settings corresponding to the correction in Figure 5 and Figure 8(b) showing the settings corresponding to the correction in Figure 6.

The principle of the method according to the invention and the implementation of the device are shown in Figure 4, which presents a schematic and simplified view of an audio system having three channels to achieve a stereophonic impression, namely, a middle channel C, a left channel L and a right channel R as well as loudspeakers 1, 2 and 3 corresponding to them. In accordance with the principle of the invention, channels C, L and R are equipped with the corresponding controllable delay means 11, 12 and 13, which correspondingly receive the settings D1, D2 and D3 that provide a delay affecting the audio signal of the channel in question. One versed in the art will understand that the audio channel comprises, even when shown at the level of a block diagram and depending on the implementation, a different number of other functional blocks than those shown here. The primary location of delay means 11, 12 and 13 is before the output stages corresponding to the channels, which output stages are not shown in this figure either.

Delay means 11, 12 and 13 can be, in accordance with the implementation of the circuit connections of the audio channel, either analog or digital delay means. Analog delay means can be, for example, so-called bucket brigades that are implemented using CMOS technology, and when the audio signal of the channel is in the digital mode the delay means can be implemented, in a manner known to one versed in the art, easily by means of memory circuits or, in so far as a digital signal processor is otherwise used in the implementation, very economically and advantageously by means of it.

In the following a discussion is given of correction of the auditory image by means of the invention in the example cases depicted in Figures 2 and 3. Figure 5 shows how the correction is made in the case shown in Figure 2, in which the middle loudspeaker 1 is too close to the viewer/listener 4 with respect to the assumed ideal sound reproduction situation. Delay means 11 of middle channel C is given the setting D1, which imparts to the audio signal of the middle channel a delay corresponding to an increase in the distance C of the loudspeaker of the middle channel, with respect to the viewer/listener 4, apparently by the distance dc such that c+dc is roughly as large as the distance L of the left loudspeaker and the distance R of the right loudspeaker. The settings D2 and D3 of delay means 12 and 13 of the left channel L and right channel R are kept at zero. This enables a situation to be reached in which the virtual location l' of the loudspeaker of the middle channel corresponds to the location according to an ideal reproduction situation, as is shown by the dashed line in Figure 5.

Figure 6 shows the correction required by the sound reproduction situation in Figure 3. When the viewer/listener 4 is at the greatest distance from loudspeaker 3 in Figure 3, the other two loudspeakers 1 and 2 should be virtually displaced away from viewer/listener 4. Accordingly, delay means 11 of middle channel C is given the setting D1, which imparts to the audio signal of the middle channel a delay corresponding to an increase in the distance c of loudspeaker 1 of the middle channel, in respect of the viewer/listener, apparently by the distance dc such that c+dc is roughly equivalent to r. Delay means 12 of left channel L is correspondingly given the setting D2, which imparts to the audio signal of left channel L a delay corresponding to an increase in the distance of the left loudspeaker 2, in respect of the viewer/listener 4, by a virtual distance dl such that l+dl is also roughly equivalent to r. This permits a situation to be reached in which the virtual locations 1' and 2' of the loudspeakers of the middle channel and the left channel together with the location of loudspeaker 3 of the right channel correspond roughly to the ideal sound reproduction situation shown in Figure 1.

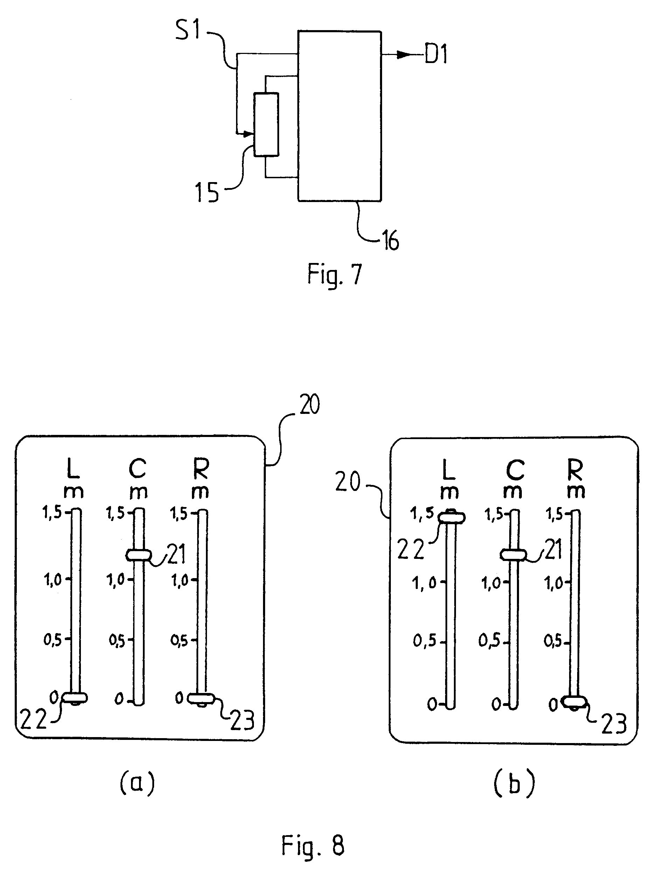

Figure 7 shows a block diagram of a certain circuit solution for setting the delay of an audio channel, in this case, channel C. It incorporates slide-controllable resistor 15, which is connected to electrical circuit 16 such that to accomplish the setting S1 of slide-controllable resistor 15, circuit 16 resistively provides the setting D1 for the delay means 11 of channel C. One versed in the art will know a large group of alternatives by means of which such setting circuits can be implemented, and thus the method of implementing the circuit is not essential for the invention. For example, in place of slide-controllable resistor 15, it is possible to use some other controllable component that can also be controlled, for example, by turning it. For all the channels equipped with a controllable delay means there are corresponding delay-setting circuits. It is clear that circuit 16 itself can also be implemented with a circuit solution that is common for all the channels.

Figure 8 shows a certain embodiment of a device for setting the channel delays in the above-discussed multichannel audio system, in which there are three channels C, L and R. It comprises, for example, the area 20 on the front panel of the TV receiver, the panel having for each channel C, L, R a corresponding slide control 21, 22, 23 that is provided with a scale giving a direct readout in metres of the virtual additional distance corresponding to the delay that is to be set. Each slide control sets, for example, the slide-controllable resistor according to the circuit solution shown in Figure 7 such that a setting corresponding to the delay means is obtained for the setting of this resistor.

Figure 8(a) shows a setting corresponding to the correction of Figure 5. Delays are not set for channels L and R, and the controls 22 and 23 corresponding to them are thus at zero. When the viewing distance C in Figures 2 and 5 is assumed to be about 3 metres, it is necessary to obtain a delay corresponding to a virtual additional distance of 1.2 metres, which delay is about 3.5 ms, in order to obtain a listening situation that approaches the ideal situation. Accordingly, the control of middle channel C has been set at the point 1.2 m and this setting, by way of variable resistor 15 and circuit 16, imparts to delay means 11 the setting D1 which adjusts to the value 3.5 ms the delay which the delay means gives to the audio signal.

Figure 8(b) shows the setting corresponding to the correction of Figure 6. A delay is not set for channel R, and the corresponding control 23 is thus at zero. When the situation is like that shown in Figure 3 and the viewing distance is roughly 3 metres, corresponding additional distances of 1.2 and 1.5 meters are needed for the loudspeakers of channels C and L. Accordingly, controls 21 and 22 have been set correspondingly at the 1.2 and 1.5 metre point and these settings, working by way of the corresponding setting circuits, impart to delay means 11 and 12 the corresponding settings D1 and D2 which adjust the delays which the delay means impart to the corresponding audio signals to be, respectively, 3.5 ms and 4.4 ms.

The invention has been described in the above as applied to a television audio system and its frontal auditory image which is formed by means of three audio channels and the corresponding loudspeakers. The purpose is not, of course, to confine the invention to this, but instead the audio system can also be some other multichannel audio system, and the number of audio channels and loudspeakers by means of which the auditory image is formed can be some other number than three. Those versed in the art will also understand that the setting devices by means of which the delays of the audio channels or the additional distances corresponding to the delays are set directly in units of length can be implemented in a number of different ways. The invention can vary within the purview of the following claims.

## Claims

1. A method in a multichannel audio system - which for sound generation and reproduction purposes and in order to achieve a stereo impression has several channels (C, L, R) used in a well-known manner and which in a reproduction situation are brought each to its own speaker (1, 2, 3) located at a distance from the other speakers - for correcting, in a reproduction situation, the narrowing and distortion of the auditory image due to the location of the listener (4) and the loudspeakers (1, 2, 3) that differs from the assumed ideal position when generating sound in which method at least for the audio signal of one channel (C, L) a delay is set (D1, D2) virtually to displace the corresponding loudspeaker (1, 2) by a distance (dc, dl) from the listener (4) to the location (1', 2') which with respect to the actual locations of the other loudspeakers (1, 2, 3) or to the virtual locations obtained (2', 1') by setting a delay to the corresponding channels, corresponds as well as possible to the assumed ideal reproduction situation when producing sound, **characterized** in that a delay is set directly in units of length as a virtual distance increase (dc, dl) corresponding to the delay.

2. A method according to claim 1, **characterized** in that the audio system is a television audio system.

3. A method according to claim 1 or 2, **characterized** in that the auditory image is the frontal auditory image of an audio system.

4. A device in a multichannel audio system - which for sound generation and reproduction purposes and in order to achieve a stereo impression has several channels (C, L, R) used in a well-known manner and which in a reproduction situation are brought each to its own speaker (1, 2, 3) located at a distance from the other speakers - for correcting, in a reproduction situation, the narrowing and distortion of the auditory image due to the location of the listener (4) and the loudspeakers (1, 2, 3) that differs from the assumed ideal position when generating sound, the device incorporating at least in one channel (C, L, R) before the loudspeaker (1, 2, 3) a controllable delay means (11, 12, 13) which in accordance with the setting (D1, D2, D3) given to it delays, on the channel (C, L, R), the audio signal coming to the corresponding loudspeaker (1, 2, 3) in order to impart to the loudspeaker (1, 2), with respect to the listener (4), a virtual additional distance (dc, dl) corresponding to the delay, **characterized** in that it incorporates the means (20, 21, 22, 23) for imparting a virtual additional distance (dc, dl, dr) correspondingly to each loudspeaker (1, 2, 3) directly in length units as well as means (15, 16) for converting each setting given in length units into a setting (D1, D2, D3) that matches the corresponding delay means (11, 12, 13).

5. A device according to claim 4, **characterized** in that the audio system is a television audio system.

6. A device according to claim 4 or 5, **characterized** in that the auditory image is the frontal auditory image of an audio system.
